# EUROPÄISCHE PATENTSCHRIFT

(11) **EP 2 926 946 B1**
(45) Veröffentlichungstag und Bekanntmachung des Hinweises auf die Patenterteilung: **03.10.2018**
(21) Anmeldenummer: 14163513.6
(22) Anmeldetag: 04.04.2014
(51) Int. Cl.: B24B 27/00, B24B 41/00

(54) **Universal-Ladegruppe**
Universal charger group
Groupe de charge universel

(43) Veröffentlichungstag der Anmeldung: 07.10.2015
(73) Patentinhaber: OFFICINA MECCANICA DOMASO S.p.A., 22013 Domaso (IT)
(72) Erfinder: Kunz, Gabriella, 22015 Gravedona ed Uniti (CO) (IT); Almici, Luca Giovanni, 22010 Cremia (CO) (IT)
(74) Vertreter: Popp, Eugen

(56) Entgegenhaltungen:
- WO-A1-2012/098128
- DE-A1- 2 417 685
- DE-A1- 2 426 327
- DE-A1-102004 034 349
- DE-A1-102012 203 617
- JP-A- S 591 142
- JP-A- 2002 079 339
- US-A- 3 844 069

## Beschreibung

Die Erfindung betrifft eine Anordnung zum automatischen Laden von Werkstücken nach Anspruch 1, eine Schleifmaschine, die eine solche Anordnung umfasst, nach Anspruch 12 sowie ein Verfahren zum automatischen Laden von Werkstücken nach Anspruch 13.

Das automatische Laden von Werkstücken ist Teil vieler automatisierter Fertigungsprozesse in der Industrie. Häufig werden Werkstücke zur Bearbeitung einer Werkzeugmaschine automatisiert zugeführt, damit die Maschine zuverlässig, kontinuierlich und somit wirtschaftlich arbeiten kann. Eine gute Auslastung einer Werkzeugmaschine ist für einen wirtschaftlichen Fertigungsprozess von besonderer Bedeutung, wenn die Maschine teuer ist oder große Stückzahlen von Werkstücken zu Maschinenelementen verarbeitet werden sollen. Eine große Herausforderung stellen Fertigungsprozesse dar, in denen auf einer Werkzeugmaschine nacheinander verschiedene Arbeitsaufträge, also Lose unterschiedlicher Werkstücke, bearbeitet werden sollen. Für deren Bearbeitung muss die Werkzeugmaschine bzw. das Beladungssystem häufig umgerüstet bzw, auf die jeweiligen Werkstücke angepasst werden. Um eine Werkzeugmaschine auch für solche Aufträge wirtschaftlich betreiben zu können, sollte die Maschine einfach mit verschiedenartigen Werkstücken automatisch beladen werden können.

Ein Beispiel dafür stellen Federendenschleifmaschinen dar, mit denen die Enden von aus Draht gewickelten oder gewundenen Schraubendruckfedern planparallel geschliffen werden, damit die Federn im eingebauten Zustand als Maschinenelemente an definierten Auflageflächen sauber axial belastet werden können. Heute werden immer häufiger kleinere Serien von Federn derselben Sorte für spezielle Anwendungen in Auftrag gegeben. Eine bestimmte Sorte von Federn kann beispielsweise über den Werkstoff, den Durchmesser, die Länge oder die Drahtstärke definiert sein. Um solche Aufträge auf einer Federendenschleifmaschine wirtschaftlich durchführen zu können, ist es wichtig, die Maschine auch mit verschiedenartigen Schraubendruckfedern automatisch beladen zu können.

Bei Federendenschleifmaschinen werden Schraubendruckfedern in Federbohrungen in einen Ladeteller eingelegt bzw. eingesteckt und durch Rotation des Ladetellers einer Schleifeinheit der Maschine zum beidseitigen Schleifen zugeführt. Häufig sind Reihen von Federbohrungen in einem Ladeteller vorgesehen. Grundsätzlich können Schraubendruckfedern im Zustellverfahren oder im Durchlaufverfahren geschliffen werden. Im Zustellverfahren wird der Ladeteller zwischen zwei koaxial parallel angeordnete Schleifscheiben gedreht, die dann in Richtung der Federenden zugestellt werden und diese schleifen. Im Durchlaufverfahren dreht sich der Ladeteller kontinuierlich oder auch taktweise zwischen zwei, typischerweise leicht gegeneinander verkippten, Schleifscheiben hindurch, wobei die Federenden geschliffen werden.

Es sind verschiedene Bestückungssysteme bekannt, um Schraubendruckfedern automatisiert in einen Ladeteller einer Federendenschleifmaschine zu laden. Beispielsweise sind feststehende Bestückungsvorrichtungen bekannt, die über einem taktweise drehenden Ladeteller installiert werden und alle Federbohrungen einer Reihe gleichzeitig bestücken. Solche Vorrichtungen sind nur für eine einzige Federsorte ausgelegt. Um eine andere Federsorte zu laden, ist ein aufwendiger, insbesondere zeitaufwendiger, Umbau bzw. eine Umrüstung der Bestückungsvorrichtung notwendig. Dies führt zu einem Stillstehen der Schleifmaschine während der Umrüstphase. Dadurch ist die Federendenschleifmaschine schlecht ausgelastet und der Fertigungsprozess teuer, insbesondere wenn die zu bearbeitende Federsorte häufig wechselt.

Eine weitere Möglichkeit, insbesondere für das Durchlaufschleifen, stellen Bestückungssysteme dar, bei denen eine Bestückungsvorrichtung mit dem kontinuierlich drehenden Ladeteller abschnittsweise mitrotiert. Während die Bestückungsvorrichtung in Umfangsrichtung des Ladetellers mitrotiert, können Federbohrungen mit Schraubendruckfedern bestückt werden. Anschließend fährt die Bestückungsvorrichtung zurück in ihre Ausgangslage, um die nächste Reihe von Federbohrungen bestücken zu können. Solche Vorrichtungen sind nur für eine einzige Federsorte ausgelegt. Zusätzlich zu dem bereits genannten Nachteil einer aufwendigen Umrüstung für wechselnde Federsorten, ist für solche Systeme zusätzlich eine aufwendige Synchronisation zwischen der Drehung des Ladetellers und der Bewegung der Bestückungsvorrichtung notwendig. Dadurch ist eine solche Bestückungsvorrichtung teuer, komplex und fehleranfällig.

Seltener werden Roboter mit Greifern bzw. Zangen zur Bestückung von Ladetellern von Federendenschleifmaschinen eingesetzt. Dabei nimmt ein Roboter Schraubendruckfedern von einer Aufnahmestelle auf, um sie dann mit einem Greifer in eine Federbohrung des Ladetellers einzusetzen. Dieses Bestückungssystem hat den Nachteil, dass der Roboter ständig zwischen der Aufnahmestelle der Schraubendruckfeder und dem Ladeteller hin- und herfahren muss. Diese Art der Bestückung ist deshalb langsam und stellt hohe Anforderungen an die Bereitstellung der Federn an der Aufnahmestelle, die von dem Roboter zuverlässig aufgenommen werden können müssen. Ein solches Bestückungssystem ist deshalb, insbesondere für größere Stückzahlen, unwirtschaftlich und fehleranfällig.

US3844069 offenbart eine Anordnung umfassend: einen Ladeteller, eine Bestückungsvorrichtung mit einer Positionierungseinheit und einer Ladegruppe mit mehreren Lademodulen, die jeweils eine Förderleitung, einen Halteabschnitt, eine Mündungsöffnung und eine Sperrvorrichtung aufweisen. Die technischen Herausforderungen für das automatische Laden von Werkstücken in Werkzeugmaschinen mit rotierenden Ladetellern sind, insbesondere im Hinblick auf häufig wechselnde Werkstücksorten, im Stand der Technik noch nicht befriedigend gelöst.

Die vorliegende Erfindung hat deshalb die Aufgabe, eine Anordnung zum automatischen Laden von Werkstücken und ein Verfahren zum automatischen Laden von Werkstücken mit erhöhter Flexibilität und Produktivität bereitzustellen. Insbesondere soll die kontinuierliche Beladung einer Werkzeugmaschine mit Werkstücken, eine kürzere Beladezeit und eine kürzere Umrüstzeit einer Ladevorrichtung für unterschiedliche Werkstücksorten erreicht werden.

Diese Aufgabe wird mit einer Anordnung zum automatischen Laden von Werkstücken gemäß dem Anspruch 1, einer Schleifmaschine gemäß Anspruch 12 sowie einem Verfahren zum automatischen Laden von Werkstücken gemäß Anspruch 13 gelöst.

Die Aufgabe wird insbesondere durch eine Anordnung nach Anspruch 1 gelöst.

Die Aufnahmeöffnungen sind exzentrisch, also außerhalb der Drehachse des Ladetellers, angeordnet. Dadurch kann sich eine Aufnahmeöffnung bei Drehung des Ladetellers entlang einer Kreisbahn um die Drehachse des Ladetellers bewegen. Eine Aufnahmeöffnung könnte durch eine Vertiefung oder einen Hohlraum im Ladeteller in der Oberfläche des Ladetellers gebildet werden, insbesondere durch eine ganz oder teilweise durchgehende Bohrung im Ladeteller, vorzugsweise in Richtung der Drehachse des Ladetellers. Eine Aufnahmeöffnung könnte auch in einer Halte- oder Klemmvorrichtung ausgebildet sein, die auf dem Ladeteller zur Aufnahme eines Werkstücks angebracht sein könnte. Die Vielzahl von Aufnahmeöffnungen kann voneinander verschieden sein, insbesondere unterschiedliche Tiefe und/oder Durchmesser aufweisen, oder gleich ausgebildet sein. Werkstücke könnten in einer Aufnahmeöffnung lose oder fest, insbesondere reibschlüssig, fixiert werden.

Unter dem Begriff "Bestückung" kann das Auf- bzw. Einladen von zu bearbeitenden Werkstücken auf oder in den Ladeteller, insbesondere deren Platzierung in den Aufnahmeöffnungen, verstanden werden. Die Werkstücke können beliebige Gestalt, Abmessungen und Werkstoffe aufweisen. Die erfindungsgemäße Anordnung zum automatischen Laden von Werkstücken ist aber insbesondere zum Beladen von Ladetellern mit zylindrischen länglichen Werkstücken, vorzugsweise Schraubenfedern, weiter vorzugsweise Schraubendruckfedern, insbesondere zur Zuführung zu einer Federendenschleifmaschine, besonders gut geeignet. Schraubendruckfedern können beispielsweise aus gewickeltem oder gewundenem Draht, vorzugsweise aus metallischen Werkstoffen, hergestellt sein. Schraubendruckfedern können beispielsweise zylindrisch, kegelig, konisch oder doppelt konisch sein und unterschiedliche Durchmesser, insbesondere Innen- und/oder Außendurchmesser und/oder Längen haben.

Unter einem Bestückungsroboter kann eine Maschine verstanden werden, die automatisiert die Tätigkeit des Bestückens des Ladetellers durchführt. Insbesondere kann der Bestückungsroboter ein Automat sein, der aufgrund von programmierten Befehlen und/oder empfangenen Sensorsignalen bestimmte Schritte zur Bestückung des Ladetellers ausführt, insbesondere unter Ausnutzung mehrerer Freiheitsgrade. Der Bestückungsroboter umfasst eine Positionierungseinheit und eine Ladegruppe, wobei die Positionierungseinheit dazu dienen kann, die Ladegruppe in eine bestimmte Position zu bewegen. Die Positionierungseinheit könnte beispielsweise mehrere Glieder, Dreh- oder Schubgelenke, und/oder gesteuerte Antriebe, insbesondere einen Roboterarm, umfassen. Weiterhin könnte die Positionierungseinheit eine Steuerung umfassen. Die Ladegruppe kann mehrere Lademodule umfassen, könnte aber auch nur ein einziges Lademodul aufweisen. Die Ladegruppe könnte mit der Positionierungseinheit dahingehend zusammenwirken, dass die Positionierungseinheit ein Lademodul der Ladegruppe in eine geeignete Position bewegt, damit das Lademodul das eigentliche Laden der Werkstücke in den Ladeteller vornehmen kann. Es könnten mehrere Bestückungsroboter gleichzeitig oder zeitlich versetzt zur Bestückung des Ladetellers vorgesehen sein.

Unter einem Lademodul könnte eine modulare Einheit, also insbesondere eine austauschbare und/oder zu anderen Teilen der Ladegruppe, kompatible Vorrichtung verstanden werden. Ein Lademodul könnte neben einer Förderleitung, einem Halteabschnitt, einer Mündungsöffnung und einer Sperrvorrichtung, noch weitere Elemente für das Laden von Werkstücken aufweisen. Der Halteabschnitt muss kein Abschnitt der Förderleitung sein, genauso wenig wie die Mündungsöffnung eine Öffnung, beispielsweise am Ende, der Förderleitung oder des Halteabschnitts sein muss. Vielmehr kann es sich dabei um Elemente eines Lademoduls handeln, die ein Werkstück entlang einer Förderbahn von einer Lagerstelle, an der Werkstücke der erfindungsgemäßen Anordnung zum automatischen Laden bereitgestellt werden, bis zur Aufnahme im Ladeteller passiert bzw. durchläuft. Vorzugsweise durchläuft ein Werkstück entlang seiner Förderbahn der Reihe nach zuerst die Förderleitung, dann den Halteabschnitt und schließlich die Mündungsöffnung. An der der Mündungsöffnung abgewandten Seite des Lademoduls kann eine Vereinzelungs-, Sortier-, und/oder sonstige Einrichtung zur Bereitstellung von Werkstücken vorgesehen sein.

Die Förderbahn eines Werkstücks kann entlang einer, vorzugsweise durch eine Förderleitung verlaufen, die beispielsweise ein Kunststoffrohr, einen Schlauch, einen Käfig, oder eine sonstige, vorzugsweise flexible, für Werkstücke geeignete Fördervorrichtung umfassen kann. Ein Werkstück könnte auf verschiedene Arten entlang der Förderleitung transportiert werden. Beispielsweise könnte ein Werkstück durch die Förderleitung angesaugt, durch sie hindurchgeblasen, bzw. in sie eingeblasen, und/oder aufgrund der Gravitation an ihr bzw. in ihr entlang gleiten. Mehrere Lademodule könnten sich eine Förderleitung teilen.

Ein Werkstück kann über die Förderleitung in den Halteabschnitt gelangen, wobei der Halteabschnitt auch in der Förderleitung selbst ausgebildet sein kann. Ein Halteabschnitt könnte mehr als ein Werkstück gleichzeitig aufnehmen können. Insbesondere kann der Halteabschnitt dazu ausgelegt sein, ein Werkstück, zumindest vorübergehend, zu fixieren, festzuhalten oder in Position zu halten. Dabei könnte das Werkstück vorzugsweise längs zum Halteabschnitt, insbesondere mit seiner Längsachse mit der Mittelachse der Mündungsöffnung fluchtend, ausgerichtet sein. Der Halteabschnitt ist vorzugsweise oberhalb des Ladetellers angeordnet, so dass die Schwerkraft auf im Halteabschnitt aufgenommenes Werkstück in Richtung des Ladetellers wirkt.
Die Mündungsöffnung kann derart ausgebildet sein, dass ein Werkstück durch sie hindurch in Richtung des Ladetellers fallen könnte. Insbesondere könnte die Mündungsöffnung an der Stelle angeordnet sein, an der ein Werkstück das Lademodul, die Ladegruppe und/oder den Bestückungsroboter verlässt, um in den Ladeteller geladen zu werden.

Mittels der Sperrvorrichtung kann ein Werkstück, das sich im Halteabschnitt befindet, zunächst im Halteabschnitt zurückgehalten werden, und zu einem geeigneten Zeitpunkt freigegeben werden. Die Sperrvorrichtung ist vorzugsweise oberhalb der Mündungsöffnung vorgesehen, so dass ein freigegebenes Werkstück durch die Mündungsöffnung hindurchfallen könnte. Die Sperrvorrichtung kann eine Vorrichtung sein, die beispielsweise mechanisch, insbesondere reib-, form- oder kraftschlüssig, oder elektromagnetisch, ein Werkstück am Fallen durch die Mündungsöffnung hindern oder dies ermöglichen könnte. Unter dem Begriff "Rückhalten" kann also insbesondere das Verschließen, Versperren oder Abriegeln der natürlichen Bewegungsbahn eines Werkstücks oder die Fixierung eines Werkstücks verstanden werden. Unter dem Begriff "Freigeben" hingegen kann das Öffnen, insbesondere die Entfernung eines Hindernisses aus der natürlichen Bewegungsbahn eines Werkstücks oder das Lösen einer Fixierung des Werkstückes verstanden werden.

Es wäre auch denkbar, Werkstücke ohne die Ausnutzung der Gravitation in den Ladeteller zu laden, beispielsweise indem Werkstücke aus der Mündungsöffnung hinausragen, während sie in einem Halteabschnitt festgehalten werden. Auf diese Weise könnten sie beispielsweise unabhängig von der Lage des Gravitationsfeldes in eine Aufnahmeöffnung des Ladetellers beispielsweise eingesteckt werden.

Die Steuereinheit könnte Signale von Sensoren empfangen und berücksichtigen, die beispielsweise von Sensoren an dem Ladeteller, der Ladegruppe, einem Lademodul oder der Positionierungseinheit an die Steuereinheit gesendet werden könnten. Weiterhin könnte die Steuereinheit ein Bussystem, eine Recheneinheit und/oder einen Datenspeicher umfassen, insbesondere einen Industrie-PC. Die Steuereinheit könnte durch Senden von Signalen an Aktoren, beispielsweise einen Antrieb des Ladetellers oder Aktoren des Bestückungsroboters, insbesondere an Stellglieder der Positionierungseinheit, die Anordnung zum automatischen Laden von Werkstücken steuern. Diese Aktoren könnten beispielsweise elektrisch, hydraulisch oder pneumatisch wirken. Die Steuereinheit könnte insbesondere eine zentrale Steuereinheit der erfindungsgemäßen Anordnung und/oder einer Schleifmaschine sein. Insbesondere könnte die Steuereinheit auch ein Druckluftsystem, der erfindungsgemäßen Anordnung steuern, beispielsweise zur pneumatischen Steuerung von Komponenten der Anordnung.

Die Positionierung des Ladetellers und/oder der Ladegruppe zueinander kann durch Rotation des Ladetellers, durch Bewegung der Ladegruppe oder durch beide Maßnahmen gleichzeitig erfolgen. Durch die Ausrichtung einer Mündungsöffnung mit einer Aufnahmeöffnung könnte erreicht werden, dass ein Werkstück aus der Mündungsöffnung in die darunterliegende Aufnahmeöffnung fallen könnte. Insofern könnte eine Mündungsöffnung als mit einer Aufnahmeöffnung übereinstimmend angesehen werden, wenn beide Öffnungen in Richtung der Gravitation zeigen und dabei, beispielsweise zu einer gemeinsamen Mittelachse, entlang dieser Richtung ausgerichtet sind, wobei die Mündungsöffnung sich im Schwerefeld oberhalb der Aufnahmeöffnung befindet. Eine solche Form der relativen Ausrichtung könnte sowohl in einem feststehenden Bezugssystem, beispielsweise bei einem feststehenden Ladeteller, oder in einem bewegten Bezugssystem, beispielsweise bei einem drehenden Ladeteller, gegeben sein. Vorzugsweise sind die Mündungsöffnung und die Aufnahmeöffnung kreisrund und weisen einen im Wesentlichen gleichen Durchmesser auf. Bei konzentrischer Ausrichtung der beiden Öffnungen zueinander könnte ein, vorzugsweise zylindrisches, Werkstück, das von der Sperrvorrichtung im Halteabschnitt zurückgehalten wird, aus der Mündungsöffnung in die darunterliegende Aufnahmeöffnung fallen bzw. gleiten, sobald es von der Sperrvorrichtung freigegeben wird. Die Sperrvorrichtung könnte von der Steuereinheit angesteuert und somit betätigt, insbesondere von einem Rückhaltezustand in einen Freigabezustand umgeschaltet, werden.

Die Steuereinheit kann dazu ausgelegt sein, die Positionierung des Ladetellers und der Ladegruppe zueinander und die Freigabe eines Werkstückes mehrmals hintereinander, also beispielsweise sich in bestimmten Zeitintervallen wiederholend, auszuführen. Insbesondere könnte über mehrere Zeitintervalle hinweg eine kontinuierliche Beschickung das mindestens einen Lademoduls mit Werkstücken, vorzugsweise mittels der Förderleitung, gewährleistet sein, sodass sich die Ladegruppe ständig über dem Ladeteller befindet, insbesondere ohne dass die Positionierungseinheit zum Zweck der Aufnahme weiterer Werkstücke bewegt werden muss. Ein Werkstück würde dann stets im Halteabschnitt bereitgehalten werden, um in den Ladeteller geladen zu werden. Insbesondere könnten die genannten Schritte von der Steuerung sooft unmittelbar hintereinander ausgeführt werden, dass der Ladeteller mit allen Werkstücken beladen werden kann, die in den Ladeteller geladen werden sollen, um beispielsweise anschließend in einer Federendenschleifmaschine innerhalb eines Bearbeitungszyklus im Zustellschleifverfahren geschliffen zu werden.

Es wäre denkbar, mehrere solcher erfindungsgemäßer Anordnungen für eine Schleifmaschine, insbesondere Federendenschleifmaschine, vorzusehen. Insbesondere könnte eine Schleifmaschine mehrere Ladeteller aufweisen, die gleichzeitig oder nacheinander, insbesondere an verschiedenen Stellen der Schleifmaschine, mit jeweils einer erfindungsgemäßen Anordnung automatisch beladen werden könnten. Dabei könnten mehrere Bestückungsroboter in jeder oder einzelnen der erfindungsgemäßen Anordnungen zur Bestückung von Ladetellern eingesetzt werden.

Der Vorteil einer solchen erfindungsgemäßen Anordnung zum Laden von Werkstücken ist, dass durch den Einsatz eines Bestückungsroboters, der insbesondere mit Werkstücken beschickt werden kann, die Flexibilität und die Produktivität des Beladungsprozesses erhöht wird. Dadurch, dass beispielsweise ein Greifen und Transportieren der Werkstücke mit einem Greifer entfällt, kann das Laden schneller ablaufen. Aufgrund der flexiblen Auslegung, auch für unterschiedliche Werkstücksorten, entfallen weiterhin zeitaufwendige Umrüstphasen, wodurch insbesondere eine Werkzeugmaschine kontinuierlich beladen werden kann und die Produktivität weiter steigt. Insbesondere ist die Anordnung zum Laden von Werkstücken für kleine Lose effizient einsetzbar.

In einer vorteilhaften Weiterbildung der erfindungsgemäßen Anordnung zum automatischen Laden von Werkstücken ist die Positionierungseinheit dazu ausgebildet, die Ladegruppe in Umfangsrichtung und/oder Radialrichtung des Ladetellers zu bewegen. Insbesondere könnte die Positionierungseinheit von der Steuereinheit in Umfangsrichtung und/oder Radialrichtung des Ladetellers positioniert werden. Die Positionierungseinheit könnte also insbesondere so ausgeführt sein, dass die Ladegruppe wahlweise in Umfangsrichtung des Ladetellers mit dem Ladeteller, vorzugsweise während bestimmter mit dem Ladeteller synchronisierter Zeitintervalle, mitbewegt, oder in radialer Richtung des Ladetellers auf die Drehachse des Ladetellers zu bzw. von ihr weg bewegt werden. Die erfindungsgemäße Anordnung könnte also in einem Radialbestückungsbetrieb, einem Umfangsbestückungsbetrieb oder einer Mischform der beiden betrieben werden. Die Positionierungseinheit könnte aber auch räumlich feststehen und der Bestückungsroboter den Ladeteller bestücken, indem der sich unter der Ladegruppe, vorzugsweise taktweise, hindurchdreht. Insbesondere für Werkstücke, beispielsweise Schraubendruckfedern, die nicht in einem Verfahren mit kontinuierlich drehendem Ladeteller bearbeitet werden können, bietet sich der Radialbestückungsbetrieb an. Vorzugsweise bewegt die Positionierungseinheit die Ladegruppe in radialer Richtung von einer Aufnahmeöffnung zu einer nächsten, während der Ladeteller stillsteht. Beispielsweise sobald alle Aufnahmeöffnungen in radialer Richtung mit Werkstücken beladen sind, könnte die Positionierungseinheit die Ladegruppe zurück in ihre radiale Ausgangsposition bewegen und der Ladeteller sich ein Stück weiterdrehen.

Eine solche Ausbildung der Positionierungseinheit hat den Vorteil, dass Werkstücke sowohl bei kontinuierlich drehenden Ladetellern als auch bei nur taktweise weitergedrehten Ladetellern automatisch geladen werden können. In Bezug auf Federendenschleifmaschinen bedeutet dies, dass die erfindungsgemäße Anordnung im Durchlauf- und im Zustellschleifverfahren eingesetzt werden könnte. Insofern hat die Anordnung eine hohe Flexibilität. Außerdem entfällt eine zeitaufwendige Umrüstphase, weil beispielsweise der Wechsel von einer Art des Bestückungsbetriebs in einen anderen, vorzugsweise nur durch ein Umschalten bzw. Anpassen der Steuerung, bewerkstelligt werden könnte.

Vorzugsweise wird nur ein Lademodul zur Bestückung gleichzeitig eingesetzt. Falls mehrere Lademodule gleichzeitig eingesetzt würden, müssten sie eventuell entsprechend der Abstände der Aufnahmeöffnungen zueinander aufeinander abgestimmt sein. Durch den Einsatz nur eines Lademoduls zur Bestückung des Ladetellers mit einer bestimmten Werkstücksorte kann eine Umrüstzeit zur Anpassung der Ladegruppe beispielsweise auf die Abmessungen dieser Werkstücksorte vermieden werden. Dadurch kann die erfindungsgemäße Anordnung flexibel zum automatischen Laden von Serien verschiedener Werkstücksorten nacheinander eingesetzt werden.

In einer vorteilhaften Weiterbildung der erfindungsgemäßen Anordnung zum automatischen Laden von Werkstücken ist der Abstand der Mündungsöffnung von einer Aufnahmeöffnung in Richtung der Drehachse des Ladetellers, vorzugsweise durch den Roboterarm, insbesondere in Abhängigkeit der Länge der Werkstücke, veränderbar, insbesondere von der Steuereinheit einstellbar. Beispielsweise könnte die Mündungsöffnung zum Laden des Werkstückes möglichst nahe an eine Aufnahmeöffnung herangeführt werden, insbesondere in möglichst geringem Abstand in Richtung der Drehachse des Ladetellers über der Aufnahmeöffnung positioniert werden. Auf diese Weise kann die Zuverlässigkeit, dass ein Werkstück tatsächlich aus der Mündungsöffnung in die darunter liegende Aufnahmeöffnung fällt, erhöht werden. Außerdem könnten verschieden lange Werkstücke in Aufnahmeöffnungen geladen werden, die insbesondere verschieden weit über die Oberfläche des Ladetellers hinausragen könnten. Durch eine Veränderlichkeit des Abstands des Lademoduls vom Ladeteller, also insbesondere eine Höhenverstellbarkeit der Ladegruppe, kann eine Kollision des Bestückungsroboters mit dem Ladeteller oder einem bereits geladenen Werkstück vermieden werden. Auf diese Weise ist die Anordnung flexibler einsetzbar, weniger störungsanfällig und somit effizienter zu betreiben.

In einer vorteilhaften Weiterbildung der erfindungsgemäßen Anordnung zum automatischen Laden von Werkstücken umfasst die Positionierungseinheit einen Roboterarm, der mit der Ladegruppe verbunden ist. Der Roboterarm könnte mehrere Freiheitsgrade haben, insbesondere ein Robotergelenkarm sein, vorzugsweise um die Ladegruppe innerhalb eines großen Arbeitsbereichs positionieren zu können. Insbesondere könnte der Roboterarm fünf oder sechs Freiheitsgrade haben, vorzugsweise ein 5- oder 6-achsiger Roboterknickarm sein. Es kann aber auch ein Roboterarm mit weniger Freiheitsgraden vorgesehen sein, insbesondere, wenn in einer Ausführungsform nicht alle beschriebenen Formen des Bestückungsbetriebs umgesetzt werden sollen oder müssen. Der Roboterarm ist vorzugsweise im Umfeld des Ladetellers fest im Raum montiert, sodass sein Arbeitsbereich sich mit dem Bereich des Ladetellers deckt in dem Aufnahmeöffnungen mit Werkstücken automatisch beladen werden sollen. Der Roboterarm könnte, insbesondere um eine Achse, die senkrecht auf die Drehachse des Ladetellers steht, schwenkbar sein, insbesondere um den Abstand der Mündungsöffnung von einer Aufnahmeöffnung in Richtung der Drehachse des Ladetellers verändern zu können. Eine Verbindung des Roboterarms mit der Ladegruppe könnte mittels eines Adapterelements, an dem die Ladegruppe befestigt sein könnte, gegeben sein. Ein Adapterelement könnte beispielsweise auf das freie Ende des Roboterarms aufgesetzt, insbesondere aufgeschraubt, sein. Ein Roboterarm kann die Ladegruppe sehr präzise und schnell bewegen und somit eine Mündungsöffnung in verschiedensten Positionen genau zu einer Aufnahmeöffnung ausrichten.

In einer vorteilhaften Weiterbildung der erfindungsgemäßen Anordnung zum automatischen Laden von Werkstücken sind die Aufnahmeöffnungen in verschiedenen radialen Abständen von der Drehachse, vorzugsweise in radialen Reihen, entlang der Umfangsrichtung des Ladetellers in gleichmäßigen Abständen voneinander ausgebildet. Die Aufnahmeöffnungen können also auf Kreisbahnen und die Drehachse des Ladetellers angeordnet sein. Vorzugsweise sind die Aufnahmeöffnungen in radialen Reihen entlang einer Linie zur Drehachse des Ladetellers ausgerichtet. Eine solche regelmäßige Anordnung der Aufnahmeöffnungen ist vorteilhaft für eine möglichst einfache Positionierung der Ladegruppe bzw. des Ladetellers und der Ladegruppe relativ zueinander. Es sind aber auch andere Anordnungen der Aufnahmeöffnung denkbar, beispielsweise um eine höhere Packungsdichte der Aufnahmeöffnungen auf dem Ladeteller zu erreichen. Insbesondere für die beschriebene Form der Bestückung mit radialer Bewegung der Positionierungseinheit, ist eine Anordnung der Aufnahmeöffnungen in radialen Reihen aber vorteilhaft.

In einer vorteilhaften Weiterbildung der erfindungsgemäßen Anordnung zum automatischen Laden von Werkstücken sind die Werkstücke zylindrische, vorzugsweise kreiszylindrische, längliche Körper, vorzugsweise Schraubendruckfedern, insbesondere verschiedener Längen. Zylindrische längliche Körper lassen sich besonders gut entlang einer Förderleitung, beispielsweise einem Schlauch, transportieren. Kreiszylindrische Körper müssen entlang ihrer Umfangsrichtung nicht ausgerichtet werden und eignen sich deshalb besonders gut, um mit der erfindungsgemäßen Anordnung automatisch in den Ladeteller geladen zu werden. Beispielsweise könnten Schraubendruckfedern, insbesondere verschiedener Längen, entlang einer Förderleitung transportiert werden, in einem Halteabschnitt mit ihrer Längsachse in Richtung der Drehachse des Ladetellers ausgerichtet werden und durch eine Mündungsöffnung in eine darunterliegende Aufnahmeöffnung des Ladetellers in Form einer Durchgangsbohrung fallen.

In einer vorteilhaften Weiterbildung der erfindungsgemäßen Anordnung zum automatischen Laden von Werkstücken sind mehrere Lademodule, insbesondere zwischen 2 und 20, vorzugsweise zehn Lademodule, für verschiedene Sorten von Werkstücken, insbesondere unterschiedlicher Durchmesser, vorgesehen. Indem mehrere Lademodule für jeweils verschiedene Werkstücksorten in der Ladegruppe vorgesehen sind, kann eine Umrüstzeit für die Anpassung der Ladegruppe eine andere Werkstücksorte eingespart werden. Dabei können insbesondere die Förderleitungen auf die Geometrie, insbesondere den Durchmesser, der zu fördernden Werkstücke abgestimmt sein. Insbesondere könnten auch der Halteabschnitt, die Mündungsöffnung und/oder die Sperrvorrichtung auf die jeweilige Werkstücksorte abgestimmt sein. Es müssen nicht alle Module gleichzeitig in Betrieb sein. Insbesondere ermöglicht bereits deren Vorhaltung in der Ladegruppe einen variablen und ggf. schnellen Einsatz. Beispielsweise könnten aktive Lademodule von einem Bediener, insbesondere über die Steuereinheit, ausgewählt werden. Es ist denkbar, verschiedene Lademodule gleichzeitig zur Bestückung des Ladetellers einzusetzen, wenn in dem Ladeteller auch entsprechend angepasste Aufnahmeöffnungen vorgesehen sind. Vorzugsweise wird aber nur ein Lademodul gleichzeitig zur Bestückung verwendet. Die Vorhaltung mehrerer verschiedener Lademodule und deren separate Beschickung mit Werkstücken verschiedener Werkstücksorten, insbesondere durch die Förderleitungen, gewährleistet eine hohe Flexibilität der erfindungsgemäßen Anordnung und kann zeitaufwendige Umrüstphasen einsparen.

In einer alternativen vorteilhaften Weiterbildung der erfindungsgemäßen Anordnung zum automatischen Laden von Werkstücken sind mehrere Lademodule für gleiche Werkstücke, insbesondere mit gleichem Durchmesser, vorgesehen. Insbesondere kann die Anzahl der Lademodule den verschiedenen radialen Abständen der Aufnahmeöffnungen entsprechen. Es wäre denkbar, mehrere gleichartige Lademodule gleichzeitig zur Bestückung einzusetzen, insbesondere wenn ein Ladeteller möglichst schnell mit gleichen Werkstücken beladen werden muss. Auf diese Weise könnte beispielsweise eine komplette, vorzugsweise radiale, Reihe von Aufnahmeöffnungen gleichzeitig beladen werden.

In einer vorteilhaften Weiterbildung der erfindungsgemäßen Anordnung zum automatischen Laden von Werkstücken können Lademodule, insbesondere mittels lösbarer Verbindungselemente, zur Ladegruppe hinzugefügt und/oder aus der Ladegruppe entfernt werden. Die Ladegruppe könnte so aufgebaut sein, dass sie, beispielsweise auf Kundenwunsch, individuell anpassbar ist. Lademodule könnten beispielsweise an einem Trägerelement der Ladegruppe lösbar befestigt, insbesondere angeschraubt, aufgeschoben oder aufgesteckt, sein.

In einer vorteilhaften Weiterbildung der erfindungsgemäßen Anordnung zum automatischen Laden von Werkstücken werden die Werkstücke pneumatisch durch die Förderleitung transportiert, insbesondere in den Halteabschnitt gesaugt oder geblasen. Es wäre denkbar, beispielsweise durch einen Venturi-Effekt, im Halteabschnitt eines Lademoduls zeitweise einen Unterdruck zu erzeugen, so dass ein Werkstück beispielsweise von einer Lagerstelle durch die Förderleitung in den Halteabschnitt angesaugt wird. Vorzugsweise wird ein Werkstück aber durch einen erzeugten Luftstoß, beispielsweise am dem Halteabschnitt abgewandten Ende der Förderleitung, durch die Förderleitung in den Halteabschnitt eingeblasen. Ein entsprechendes Druckluftsystem könnte beispielsweise von der Steuereinheit dahingehend gesteuert werden, dass immer dann, wenn ein Werkstück aus der Mündungsöffnung ausgetreten ist, ein neues Werkstück, beispielsweise von einer Lagerstelle am anderen Ende der Förderleitung, in den Halteabschnitt transportiert wird.

In einer vorteilhaften Weiterbildung der erfindungsgemäßen Anordnung zum automatischen Laden von Werkstücken umfasst die Sperrvorrichtung ein verschiebliches Fixierelement, das geeignet ist, die Förderleitung zumindest teilweise zu versperren, um ein Werkstück im Halteabschnitt zurückzuhalten. Vorzugsweise ist das Fixierelement pneumatisch betätigbar. Insbesondere kann das Fixierelement, vorzugsweise in einem Rückhaltezustand, in die Förderleitung hineinragen. Insbesondere könnte das Fixierelement quer zur Förderbahn des Werkstücks verschieblich sein. Das Fixierelement könnte dabei beispielsweise eine Platte, ein Stift, ein Bolzen oder ein Gitter sein. Beispielsweise könnte ein Fixierelement in einem Rückhaltezustand unterhalb des Halteabschnitts angeordnet, insbesondere vorgeschoben, sein und in einem Freigabezustand aus dieser Position zurückgezogen sein. Dabei müsste im Rückhaltezustand der freibleibende Anteil des Querschnitts des Halteabschnitts so klein sein, dass ein Werkstück nicht mehr hindurchfallen kann. Ein solcher Mechanismus könnte pneumatisch betätigbar sein bzw. einen Druckluftzylinder umfassen. Ein Fixierelement könnte aber auch elektromotorisch angetrieben sein. Ebenfalls wäre es denkbar, dass die Sperrvorrichtung auf einem elektromagnetischen Halteeffekt, insbesondere für magnetische Werkstücke, beruht. Insbesondere könnten die Schaltzeitpunkte der Sperrvorrichtung, also die Zeitpunkte des Umschaltens der Sperrvorrichtung von einem Freigabezustand in einen Rückhaltezustand oder umgekehrt, mit der Positionierung des Bestückungsroboters synchronisiert sein. Eine solche Sperrvorrichtung hat den Vorteil, dass sie konstruktiv einfach umsetzbar ist und vorzugsweise an ein bereits vorhandenes Druckluftsystem angeschlossen werden kann.

Die genannte Aufgabe wird weiterhin durch eine Schleifmaschine, insbesondere eine Federendenschleifmaschine, gelöst, die eine erfindungsgemäße Anordnung zum automatischen Laden von Werkstücken, insbesondere Schraubenfedern, und mindestens einen, vorzugsweise mehrere, Ladeteller, der bzw. die mit der Anordnung zum automatischen Laden von Werkstücken beladen werden kann bzw. können umfasst. Eine Schleifmaschine mit der erfindungsgemäßen Anordnung hat den Vorteil, dass sie auch bei wechselnden Serien von zu bearbeitenden Werkstücken ohne große Zeitverzögerung für Umrüstphasen kontinuierlich mit Werkstücken zur Bearbeitung versorgt werden kann. Deshalb kann eine solche Schleifmaschine gut ausgelastet werden und produktiv arbeiten. Weiterhin könnte sie durch den Einsatz eines Bestückungsroboters schnell und zuverlässig beladen werden.

Die genannte Aufgabe wird weiterhin durch ein Verfahren nach Anspruch 13 gelöst.

Ein solches erfindungsgemäßes Verfahren hat den Vorteil, dass es flexibel für verschiedene Fertigungsprozesse einsetzbar ist. Insbesondere könnte es im Falle von Federendenschleifmaschinen sowohl bei einem Betrieb der Schleifmaschine im Durchlaufverfahren als auch im Zustellverfahren eingesetzt werden, weil ein Bestückungsroboter eine große Flexibilität in der Beladung des Ladetellers erlaubt. Insbesondere könnten taktweise und kontinuierlich drehende Ladeteller beladen werden. Dadurch, dass der Bestückungsroboter kontinuierlich mit Werkstücken, insbesondere durch die Förderleitung, beschickt werden kann, können Bewegungswege des Bestückungsroboters zum Aufnehmen von Werkstücken reduziert werden und somit eine kürzere Beladungszeit des Ladetellers erreicht werden. Außerdem ist das Fallenlassen bzw. Abwerfen in eine Aufnahmeöffnung weniger fehleranfällig als die kompliziertere Handhabung eines Werkstücks, beispielsweise mittels eines Greifers, durch einen Roboter. Bei Vorhaltung von mehreren Lademodulen, die für verschiedene Werkstücksorten angepasst sein können, entfallen aufwendige Umrüstarbeiten, wenn eine andere Werkstücksorte geladen werden soll. Eine mehrmalige Wiederholung der Verfahrensschritte a) bis c) ermöglicht ein schnelles Beladen des Ladetellers mit Werkstücken, weil ein gesonderter Verfahrensschritt zur Aufnahme eines Werkstücks an einem Ort außerhalb des Umfangs des Ladetellers durch eine Bewegung des Bestückungsroboters nicht notwendig ist. Insbesondere der Einsatz eines Roboterarms ermöglicht eine schnelle und präzise Positionierung der Ladegruppe, wodurch die Produktivität des Verfahrens weiter gesteigert werden könnte.

In einer vorteilhaften Weiterbildung des erfindungsgemäßen Verfahrens wählt ein Bediener, insbesondere einer erfindungsgemäßen Schleifmaschine, zu Beginn des Verfahrens einzelne Lademodule aus montierten Lademodulen einer Ladegruppe aus, für die das Verfahren, insbesondere die Schritte a) bis d), durchgeführt werden soll. Eine solche Auswahl könnte der Bediener vorzugsweise mittels einer Bedieneinrichtung vornehmen. Die ausgewählten Lademodule sind in Bezug auf die zu ladenden Werkstücke unterschiedlich. Vorzugsweise wird nur ein einziges der montierten Lademodule ausgewählt, bzw. aktiviert. Insbesondere dadurch, dass einzelne Lademodule deaktiviert oder aktiviert werden können, wobei sie vorzugsweise permanent in der Ladegruppe montiert bleiben, ermöglicht eine schnelle und flexible Umschaltung des erfindungsgemäßen Verfahrens für eine bestimmte in den Ladeteller zu ladende Werkstücksorte. Eine Bedieneinrichtung könnte beispielsweise ein Eingabegerät und eine Anzeigevorrichtung umfassen, und insbesondere mit der Steuereinheit verbunden sein. Eine solche Auswahl könnte beispielsweise über eine Nummerierung der Lademodule erfolgen oder über eine Auswahl einer Werkstücksorte, wobei die Zuordnung einer Werkstücksorte zu einem Lademodul automatisch, beispielsweise innerhalb der Steuereinheit, vorgenommen werden könnte. Eine Auswahl bestimmter Lademodule oder eines einzelnen Lademoduls, könnte aber auch durch eine manuelle Einstellung, insbesondere an der Ladegruppe, vorgenommen werden.

Ausführungsbeispiele der Erfindung werden nachfolgend anhand der Zeichnungen näher erläutert. Hierbei zeigen:
- Figur 1: eine Prinzipskizze einer Ausführungsform der erfindungsgemäßen Anordnung in einer Seitenansicht,
- Figur 2a: eine schematische Darstellung einer Ausführungsform der erfindungsgemäßen Anordnung in einer Seitenansicht,
- Figur 2b: eine schematische Darstellung der Ausführungsform der erfindungsgemäßen Anordnung nach Figur 2a in einer Draufsicht des Schnittes Y-Y,
- Figur 2c: eine schematische Darstellung der Ausführungsform der erfindungsgemäßen Anordnung nach Figur 2a oder 2b in einer Frontansicht,
- Figur 3: eine schematische Darstellung einer bevorzugten Ausführungsform der erfindungsgemäßen Anordnung mit zehn Lademodulen in einer Frontansicht,
- Figur 4: ein Ablaufdiagramm einer Ausführungsform eines erfindungsgemäßen Verfahrens.

In dem nachfolgenden Teil der Beschreibung der Erfindung werden für gleiche und gleich wirkende Elemente dieselben Bezugsziffern verwendet.

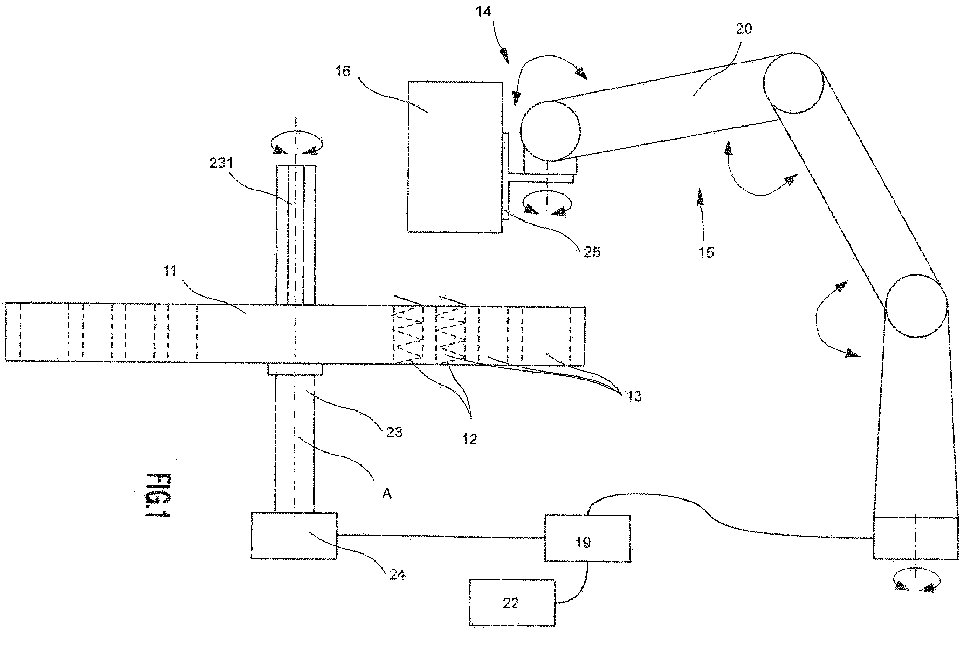

Figur 1 zeigt eine Prinzipskizze der erfindungsgemäßen Anordnung zum Laden von Werkstücken in einer Seitenansicht. Ein Ladeteller 11 ist um eine Drehachse A drehbar auf einer Ladetellerwelle 23 gelagert. Der Ladeteller 11 ist hier horizontal angeordnet, so dass seine Drehachse A in Richtung der Gravitation zeigt. Der Ladeteller 11 und die Ladetellerwelle 23 sind über eine Nutfederverbindung 231 miteinander drehfest verbunden. Beispielsweise könnte der Ladeteller 11 aber in axialer Richtung der Ladetellerwelle 23 nach oben geschoben werden und auf diese Weise ausgetauscht werden. Die Ladetellerwelle 23 wird durch einen Servomotor 24 angetrieben. Der Ladeteller 11 kann kontinuierlich um seine Drehachse A rotieren oder taktweise, d.h. um ein bestimmtes Stück innerhalb eines bestimmten Zeitintervalls, um ein bestimmtes Umfangsmaß weitergedreht werden. Der Ladeteller 11 ist hier kreiszylinderförmig ausgeführt und weist eine Vielzahl von zur Drehachse A exzentrischen Aufnahmeöffnungen 13 auf, die als Durchgangsbohrungen unterschiedlichen Durchmessers, insbesondere Federbohrungen, ausgeführt sind. Beispielhaft ist in zwei der Aufnahmeöffnungen 13 jeweils ein Werkstück 12, hier als Schraubendruckfeder, dargestellt, mit denen der Ladeteller 11 beladen sein könnte. Werkstücke 12 können beispielsweise reibschlüssig in einer Aufnahmeöffnung 13 gehalten sein, oder lose in einer Aufnahmeöffnung 13 eingesteckt sein, wobei sie auf einer Unterlage (nicht dargestellt) unterhalb des Ladetellers 11 aufstehen könnten, auf der sie mit einem Ende gleiten können, während sich der Ladeteller 11 dreht. Neben dem bzw. oberhalb des Ladetellers 11 ist ein Bestückungsroboter 14 angeordnet, der eine Positionierungseinheit 15 und eine Ladegruppe 16 umfasst. Die Ladegruppe 16 ist über ein Adapterelement 25 mit der Positionierungseinheit 15 verbunden. Die Positionierungseinheit 15 umfasst einen Roboterarm 20, der aus mehreren Gliedern und Gelenken aufgebaut ist. Der Roboterarm 20 kann der eines Industrieroboters sein, der mehrere Freiheitsgrade, vorzugsweise fünf oder sechs Freiheitsgrade, aufweisen kann. Dadurch könnte die Positionierungseinheit 15 die Ladegruppe 16 in Umfangsrichtung, in Radialrichtung und in Richtung der Drehachse A des Ladetellers 11 bewegen. Es sind auch Bewegungsbahnen möglich, die sich aus diesen Bewegungsrichtungen zusammensetzen. Die Positionierungseinheit 15 kann die Ladegruppe 16 relativ zum Ladeteller, insbesondere relativ zu den Aufnahmeöffnungen 13, positionieren. Der Ladeteller 11 und der Bestückungsroboter 14 sind mit der Steuereinheit 19 signalleitend verbunden und werden von der Steuereinheit 19 gesteuert. Es könnten Sensoren vorgesehen sein, beispielsweise ein Positionssensor des Servomotors 24 und/oder Bewegungs- bzw. Positionssensoren des Roboterarms 20, die Daten zur Bestimmung der Relativposition zwischen dem Ladeteller 11 und der Ladegruppe 16 erfassen. Diese Daten könnten, beispielsweise über ein Bussystem, an die Steuereinheit 19 übertragen werden und bei der Steuerung berücksichtigt werden.

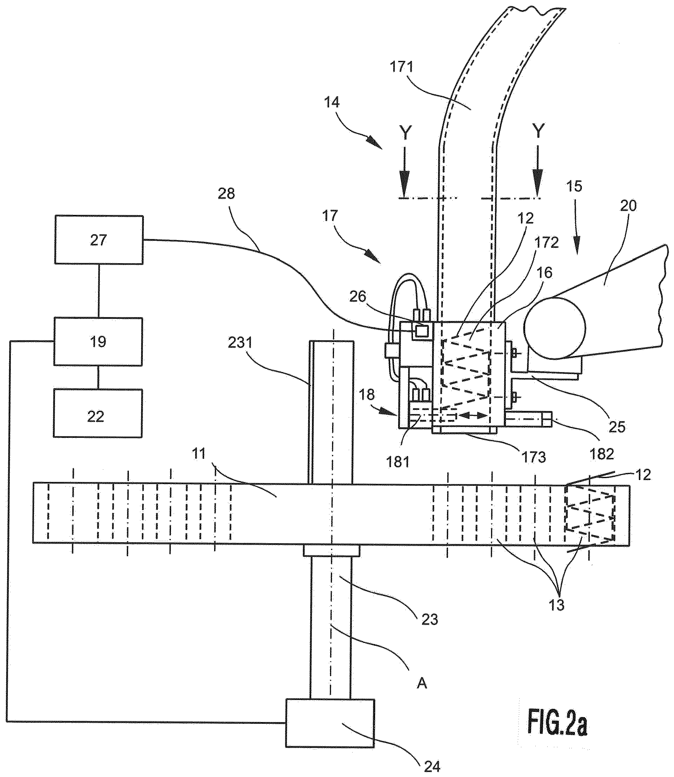

Figur 2a zeigt eine Ausführungsform der erfindungsgemäßen Anordnung in einer Seitenansicht, wobei die Positionierungseinheit 15, bzw. der Roboterarm 20, nur teilweise dargestellt ist. Die Ladegruppe 16 kann beispielsweise mittels einer Schraubverbindung an dem Adapterelement 25 befestigt sein, das an dem freien Ende des Roboterarms 20 angebracht ist. Die Ladegruppe 16 umfasst mehrere, hier genau vier, Lademodule 17, wobei auch nur ein einziges Lademodul 17 oder beispielsweise bis zu zwanzig Lademodule 17, vorzugsweise genau zehn Lademodule 17, in der Ladegruppe 16 zusammengefasst sein könnten. Ein Lademodul 17 umfasst eine Förderleitung 171, einen Halteabschnitt 172 und eine Mündungsöffnung 173, die entlang einer Förderbahn eines Werkstücks 12 angeordnet sind. Ein Werkstücks 12 könnte beispielsweise von einer Lagerstelle (nicht dargestellt), beispielsweise einem Transportband, einer Vereinzelungsvorrichtung oder einer Sortiervorrichtung, über die Förderleitung 171 in den Halteabschnitt 172 transportiert werden. Der Halteabschnitt 172 erstreckt sich in Richtung der Drehachse A des Drehtellers 11, wodurch ein Werkstück 12 mit seiner Längsachse im Wesentlichen parallel zur Drehachse A ausgerichtet wird, wenn es sich in dem Halteabschnitt 172 befindet. Unterhalb des Halteabschnitts 172 ist eine Sperrvorrichtung 18 vorgesehen, die das Werkstück 12 daran hindern kann, aufgrund der Gravitation aus dem Halteabschnitt 172 durch die Mündungsöffnung 173 aus dem Lademodul 17 zu fallen. Die Sperrvorrichtung 18 weist ein Fixierelement 181 auf, das hier als ein kreiszylinderförmiger Stift bzw. Bolzen ausgeführt ist. Das Fixierelement 181 könnte aber genauso ein Zylinder anderen Querschnitts sein, oder beispielsweise eine Platte, ein Gitter oder eine Klappe. Insbesondere könnte das Fixierelement 181 mit einem Druckluftzylinder 182 zusammenwirken, der auf der gegenüberliegenden Seite der Ladegruppe 16 angebracht ist. Die Sperrvorrichtung 18, insbesondere das Fixierelement 181, ist pneumatisch betätigbar. Es wäre aber auch eine elektromotorische, eine hydraulische oder eine rein mechanische Schaltbarkeit der Sperrvorrichtung 18 denkbar. Die Sperrvorrichtung 18 kann zwischen einem Rückhaltezustand und einem Freigabezustand hin- und herschalten, indem das Fixierelement 181 quer zum Halteabschnitt 172 hin- und hergefahren wird. Auf diese Weise kann das Fixierelement 181 den Halteabschnitt 172 zumindest teilweise versperren oder ihn freigeben, so dass ein Werkstück 12 entweder zurückgehalten, d.h. am Fallen gehindert wird, oder nach unten durch die Mündungsöffnung 173 fallen kann. Die Förderleitung 171 kann als eine, vorzugsweise flexible, Rohrleitung mit geraden und/oder gekrümmten Abschnitten, beispielsweise als ein Kunststoffrohr, ein Schlauch oder ein Käfig ausgeführt sein. Die Förderleitung 171 kann an dem Roboterarm 20 fixiert sein oder beispielsweise über eine Aufhängung von oben zu dem Bestückungsroboter 14 hinführen. An einer Lagerstelle (nicht dargestellt) können Werkstücke 12 beispielsweise über Transportbänder, lineare Vibratoren, Lagertische oder Sortiervorrichtungen so bereitgestellt werden, dass sie über die Förderleitung 171 in das Lademodul 17 gelangen können. In der vorliegenden Ausführungsform werden Werkstücke 12 pneumatisch in das Lademodul 17 befördert. Insbesondere werden Werkstücke 12 durch die Erzeugung eines lokalen Unterdrucks auf der dem Halteabschnitt 172 zugewandten Seite der Förderleitung 171 durch die Förderleitung 171 in den Halteabschnitt 172 angesaugt oder durch einen Luftstoß in den Halteabschnitt 172 geblasen. Die Ladegruppe 16 ist über Druckluftanschlüsse 26 und Druckluftleitungen 28 an ein Druckluftsystem 27 angeschlossen, das von der Steuereinheit 19 gesteuert werden kann. Beispielsweise könnten von der Steuereinheit 19 Ventile zu geeigneten Zeitpunkten geschaltet werden, um ein Werkstück 12 durch eine Förderleitung 171 anzusaugen, bzw. es in die Förderleitung 171 einzublasen, oder die Sperrvorrichtungen 18 zu schalten, insbesondere um ein Fixierelement 181 und/oder den Druckluftzylinder 182 zu betätigen. Der Druckluftzylinder 182 könnte ebenfalls über Druckluftleitungen 28 mit dem Druckluftsystem 27 verbunden sein. Die Werkstücke 12 sind hier als Schraubendruckfedern dargestellt, wobei auch beliebige andere Werkstücke, insbesondere zylindrische längliche Werkstücke, durch eine Förderleitung 171 gefördert werden könnten, um so in eine Aufnahmeöffnung 13 geladen zu werden. Schraubendruckfedern desselben Durchmessers aber unterschiedlicher Länge können in ein und derselben Förderleitung 171 zugeführt werden.

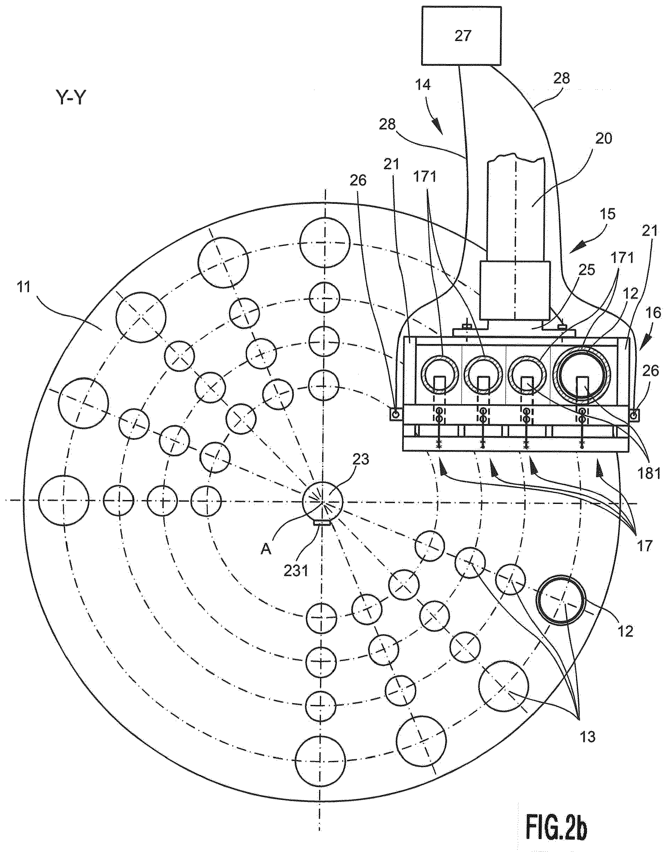

Figur 2b zeigt dieselbe Ausführungsform der erfindungsgemäßen Anordnung zum Laden von Werkstücken, wobei der Schnitt Y-Y eine Draufsicht auf das Innere der Lademodule 17 ermöglicht. Die Sperrvorrichtungen 18 sind hier in einem Rückhaltezustand gezeigt. Die Lademodule 17 sind für zwei verschiedene Durchmesser von kreisrunden Werkstücken 12 ausgelegt. Seitlich an der Ladegruppe 16 sind Druckluftanschlüsse 26 vorgesehen, über die die Ladegruppe 16, insbesondere die Sperrvorrichtungen 18 und/oder der Halteabschnitt 172, mit Druckluft versorgt werden kann, insbesondere gesteuert werden kann. Die Aufnahmeöffnungen 13 sind gleichmäßig über die Oberfläche des Ladetellers 11 verteilt, wobei sie in unterschiedlichen radialen Abständen auf Kreisbahnen um die Drehachse A angeordnet sind. Dabei bilden jeweils vier Aufnahmeöffnungen 13 eine radiale Reihe. Die dargestellten Durchmesser sowie die Anzahl der Aufnahmeöffnungen 13, insbesondere deren radiale Verteilung ist rein beispielhaft. Damit die Aufnahmeöffnungen 13 des Ladetellers 11 mit Werkstücken 12 aus der Ladegruppe 16 bestückt werden können, muss mindestens eine Mündungsöffnung 173 mit einer Aufnahmeöffnung 13 übereinstimmend ausgerichtet werden. Dies wird erreicht, indem die Ladegruppe 16 durch eine entsprechende Steuerung der Positionierungseinheit 15 durch die Steuereinheit 19 und/oder der Ladeteller 11 durch eine entsprechende Drehung um seine Drehachse A durch den Servomotor 24 entsprechend relativ zueinander positioniert werden. Dabei können mehrere Mündungsöffnungen 173 von verschiedenen Lademodulen 17 mit mehreren

Aufnahmeöffnungen 13 übereinstimmen. Vorzugsweise wird die Ladegruppe 16 aber so zum Ladeteller 11 positioniert, dass eine einzige Mündungsöffnung 173 mit einer Aufnahmeöffnung 13 übereinstimmt, d.h. entlang einer gemeinsamen Mittelachse in vertikaler Richtung ausgerichtet ist. Auf diese Weise kann die Ladegruppe 16 in radialer Richtung des Ladetellers 11 von Aufnahmeöffnung 13 zu Aufnahmeöffnung 13 weiter bewegt werden, während der Ladeteller 11 stillsteht. Dabei kann jeweils ein Werkstück 12 über die Förderleitung 171 in den Halteabschnitt 172 angesaugt oder geblasen werden, durch eine Betätigung der Sperrvorrichtung 18 durch Zurückziehen des Fixierelements 181 freigegeben werden und anschließend durch die Mündungsöffnung 173 in die darunterliegende Aufnahmeöffnung 13 fallen. Die Ladegruppe 16 könnte durch eine entsprechende Steuerung der Positionierungseinheit 15 auch über eine Aufnahmeöffnung 13 ausgerichtet werden, während sich der Ladeteller 11 dreht. Die Steuerung der Positionierungseinheit 15, insbesondere des Roboterarms 20, kann auf bekannten Bewegungsbahnen des Ladetellers 11, der Aufnahmeöffnungen 13 und der Kinematik des Roboterarms 20 beruhen und/oder auf Sensordaten, beispielsweise von Positions- und/oder Bewegungssensoren oder aus einem optischen Erkennungssystem für Aufnahmeöffnungen 13, beruhen.

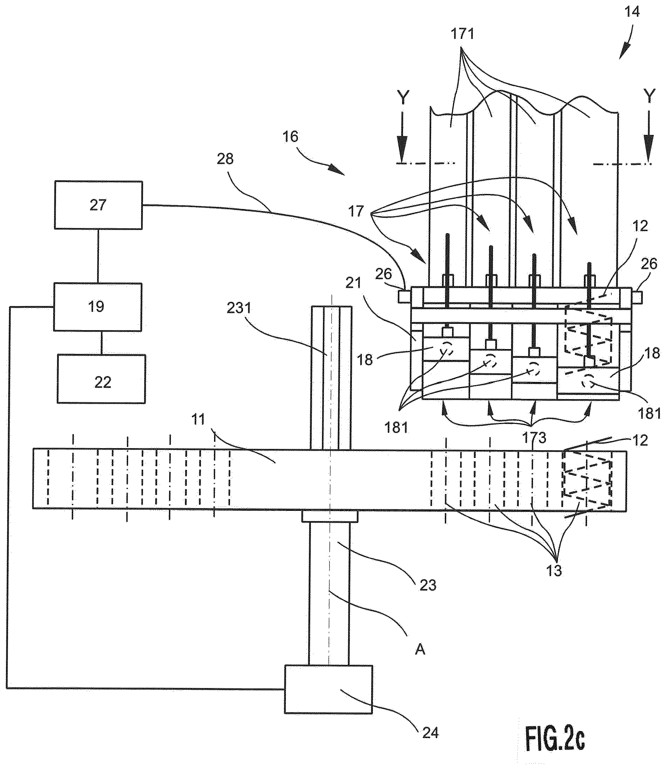

Figur 2c zeigt dieselbe Ausführungsform der erfindungsgemäßen Anordnung zum Laden von Werkstücken in einer Frontansicht. Die verschiedenen Lademodule 17 sind hier höhenversetzt zueinander angeordnet, wobei sie auch auf einer Höhe angeordnet sein können. Eine Höhenverstellbarkeit der Lademodule 17, insbesondere der Sperrvorrichtungen 18, könnte für verschiedene Längen von Werkstücken 12 vorteilhaft sein. Die Lademodule 17 sind unmittelbar nebeneinander in der Ladegruppe 16 angeordnet und können mittels lösbarer Verbindungselemente 21, beispielsweise lösbare Seitenwangenelemente der Ladegruppe 16, oder Schraub- bzw. Steckverbindungen, aus der Ladegruppe 16 entfernt oder zu ihr hinzugefügt, insbesondere ausgetauscht werden. Üblicherweise bleiben verschiedene Lademodule 17 aber an der Ladegruppe 16 montiert, auch wenn sie gerade nicht in Betrieb sind. Vorzugsweise ist nur eine Ladegruppe 17 zur Bestückung des Ladetellers 11 mit einer Werkstücksorte in Betrieb. Dadurch ist keine Abstimmung der Abstände der Lademodule 17 zueinander, insbesondere ihrer Mündungsöffnungen 173, auf die Abstände der zu beladenden Aufnahmeöffnungen 13 nötig. Falls aber eine andere Sorte von Werkstücken 12 in einen Ladeteller 11, beispielsweise nachdem dieser ausgetauscht wurde, geladen werden soll, kann ein bereits montiertes anderes Lademodul 17 schnell und einfach in Betrieb genommen werden, ohne die Ladegruppe 16 umrüsten zu müssen.

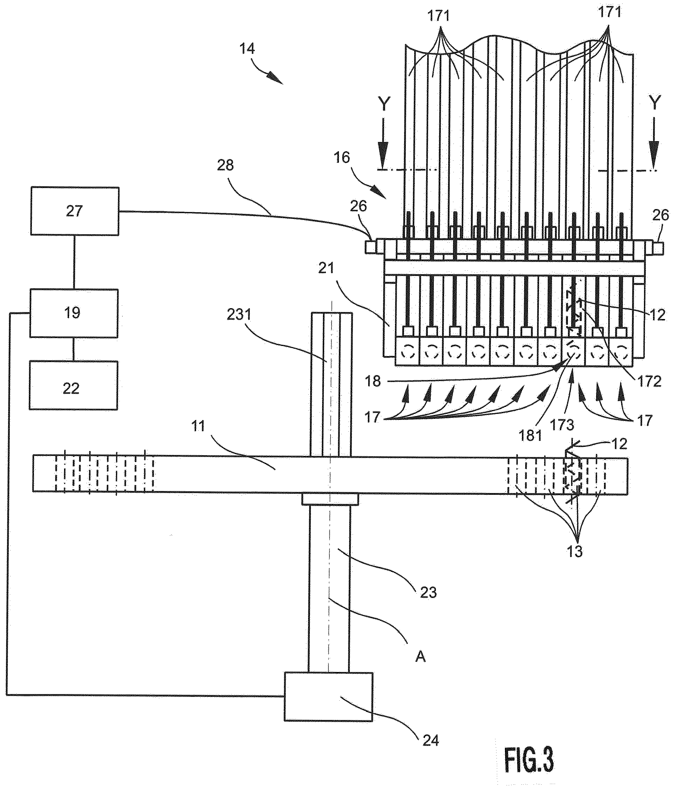

Figur 3 zeigt eine bevorzugte Ausführungsform der erfindungsgemäßen Anordnung zum Laden von Werkstücken mit zehn Lademodulen 17. Es können mehr Lademodule 17 in der Ladegruppe 16 vorgesehen sein, als Aufnahmeöffnungen 13 in radialer Richtung des Ladetellers 11 angeordnet sind. Die Lademodule 17 sind hier auf gleicher Höhe angeordnet, sind aber höhenverstellbar. Die Förderleitungen 171 der zehn verschiedenen Lademodule 17 haben jeweils unterschiedliche Durchmesser. Auf diese Weise können zehn verschiedene Sorten von Werkstücken 12, insbesondere Schraubendruckfedern, mit unterschiedlichen Durchmessern mithilfe der Ladegruppe 16 in Ladeteller 11 geladen werden, wenn das entsprechende Lademodul 17 für den Betrieb ausgewählt ist. Vorzugsweise ist nur ein Lademodul 17 aktiv, also gleichzeitig in Betrieb, wobei die verbleibenden neun deaktivierten Lademodule 17 in der Ladegruppe 16 bei Bedarf, insbesondere wenn ein Ladeteller 11 mit einer anderen Sorte von Werkstücken 12 beladen werden soll, schnell in für den automatischen Ladebetrieb ausgewählt werden können.

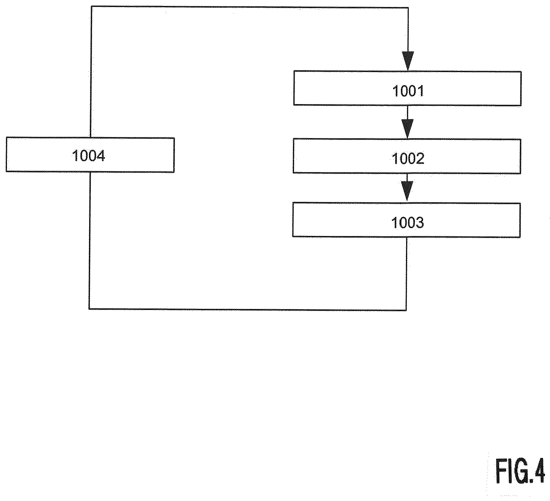

Figur 4 zeigt ein Ablaufdiagramm einer Ausführungsform eines erfindungsgemäßen Verfahrens zum Laden von Werkstücken. Aufgrund der zu bearbeitenden Sorte von Werkstücken 12 wird zunächst ein geeigneter Ladeteller 11, der über Aufnahmeöffnungen 13 verfügt, die auf die Geometrie der Werkstücke 12, insbesondere deren Länge und Durchmesser, angepasst sind, auf der Ladetellerwelle 23 angebracht. Anschließend kann beispielsweise ein Bediener einer Schleifmaschine, ein Lademodul 17 in der Ladegruppe 16, das zum Laden der gewünschten Sorte von Werkstücken 12 geeignet ist, auswählen. Diese Auswahl kann über eine Bedieneinrichtung 22 oder automatisch erfolgen. Die Auswahl könnte auch über eine manuelle Einstellung an der Ladegruppe 16 vorgenommen werden. Das erfindungsgemäße Verfahren kann nun durchgeführt werden. Dabei erfolgt zunächst ein Fördern 1001 mindestens eines Werkstücks 12 durch die Förderleitung 171 in den Halteabschnitt 172 des ausgewählten Lademoduls 17. Anschließend wird durch ein Positionieren 1002 die Ladegruppe 16 so relativ zum Ladeteller 11 positioniert, dass die Mündungsöffnung 173 über einer Aufnahmeöffnung 13, vorzugsweise an der innersten oder äußersten radialen Position einer radialen Reihe von Aufnahmeöffnungen 13, zu liegen kommt. Dies kann durch Drehung des Ladetellers 11 und/oder durch eine Bewegung des Roboterarms 20 erfolgen. Durch ein Betätigen 1003 der Sperrvorrichtung 18 kann das zuvor in den Halteabschnitt 172 beförderte Werkstück 12 freigegeben werden und durch die Mündungsöffnung 173 in die darunterliegende Aufnahmeöffnung 13 fallen. Die Schritte des Förderns 1001, Positionierens 1002 und Betätigens 1003 der Sperrvorrichtung 18 werden durch ein Wiederholen 1004 mehrmals hintereinander ausgeführt. Dabei kann das Positionieren 1002 nur ein radiales Verschieben der Ladegruppe 16 sein oder, wenn die innerste oder äußerste radiale Aufnahmeöffnung 13 einer radialen Reihe von Aufnahmeöffnungen 13 erreicht ist, auch eine Rotation des Ladetellers 11 beinhalten. Der Ladeteller 11 ist dann vorzugsweise so zu rotieren, dass die nächste leere radiale Reihe von Aufnahmeöffnungen 13 wieder an denselben Stellen wie die zuvor beladenen Aufnahmeöffnungen 13 zu liegen kommen. Zum Laden eines Werkstücks 12 führt der Roboterarm 20 vorzugsweise eine Auf-AbBewegung aus, wobei er sich zunächst auf die Aufnahmeöffnung 13 hin zubewegt, damit am tiefsten Punkt das Werkstück 12 fallengelassen werden kann, und sich der Roboterarm 20 anschließend wieder nach oben bewegt, bevor er diesen Bewegungszyklus zur Beladung der nächsten Aufnahmeöffnung 13 wiederholt. Das Verfahren kann von der Steuereinheit 19 gesteuert werden.

### Bezugszeichenliste

- 11: Ladeteller
- 12: Werkstück
- 13: Aufnahmeöffnung
- 14: Bestückungsroboter
- 15: Positionierungseinheit
- 16: Ladegruppe
- 17: Lademodul
- 18: Sperrvorrichtung
- 19: Steuereinheit
- 20: Roboterarm
- 21: lösbare Verbindungselemente
- 22: Bedieneinrichtung
- 23: Ladetellerwelle
- 24: Servomotor
- 25: Adapterelement
- 26: Druckluftanschluss
- 27: Druckluftsystem
- 28: Druckluftleitung
- 171: Förderleitung
- 172: Halteabschnitt
- 173: Mündungsöffnung
- 181: Fixierelement
- 182: Druckluftzylinder
- 231: Nut-Feder-Verbindung
- 1001: Fördern eines Werkstücks
- 1002: Positionieren der Ladegruppe und/oder des Ladetellers
- 1003: Betätigen der Sperrvorrichtung
- 1004: Wiederholen
- A: Drehachse des Ladetellers

## Patentansprüche

1. Anordnung zum automatischen Laden von Werkstücken, umfassend:
- einen Ladeteller (11) zur Aufnahme von Werkstücken (12), der
∘ um eine Drehachse (A) drehbar gelagert ist und
∘ eine Vielzahl von Aufnahmeöffnungen (13) aufweist, die exzentrisch zur Drehachse (A) angeordnet sind;
- einen Bestückungsroboter (14) zur Bestückung des Ladetellers (11) mit Werkstücken (12), wobei der Bestückungsroboter (14)
∘ eine Positionierungseinheit (15), insbesondere mit einem Roboterarm (20), und
∘ eine Ladegruppe (16) mit mehreren Lademodulen (17), die jeweils
▪ eine Förderleitung (171), einen Halteabschnitt (172), eine Mündungsöffnung (173) für Werkstücke (12) und
▪ eine Sperrvorrichtung (18) zum Rückhalten und Freigeben von Werkstücken aufweisen,
umfasst;
- eine Steuereinheit (19), die dazu ausgelegt ist, mehrmals hintereinander
∘ den Ladeteller (11), insbesondere mittels Drehung um seine Drehachse (A), und/oder die Ladegruppe (16), insbesondere mittels der Positionierungseinheit (15), relativ zueinander so zu positionieren, dass die Mündungsöffnung (173) des mindestens einen Lademoduls (17) oberhalb einer Aufnahmeöffnung (13) mit dieser übereinstimmend ausgerichtet ist, und
∘ jeweils mittels der Sperrvorrichtung (18) ein im Halteabschnitt (172) zurückgehaltenes Werkstück (12) freizugeben,
wobei mehrere unterschiedliche Lademodule (17) für verschiedene Sorten von Werkstücken (12), insbesondere unterschiedlicher Durchmesser, vorgesehen sind.

2. Anordnung zum automatischen Laden von Werkstücken nach Anspruch 1, **dadurch gekennzeichnet, dass**
die Positionierungseinheit (15) dazu ausgebildet ist, die Ladegruppe (16) in Umfangsrichtung und/oder Radialrichtung des Ladetellers (11) zu bewegen, insbesondere von der Steuereinheit (19) in Umfangsrichtung und/oder Radialrichtung des Ladetellers (11) positioniert zu werden.

3. Anordnung zum automatischen Laden von Werkstücken nach Anspruch 1 oder 2,
**dadurch gekennzeichnet, dass**
der Abstand der Mündungsöffnung (173) von einer Aufnahmeöffnung (13) in Richtung der Drehachse (A) des Ladetellers (11), vorzugsweise durch den Roboterarm (20), insbesondere in Abhängigkeit der Länge der Werkstücke (12), veränderbar, insbesondere von der Steuereinheit (19) einstellbar, ist.

4. Anordnung zum automatischen Laden von Werkstücken nach einem der vorherigen Ansprüche,
**dadurch gekennzeichnet, dass**
die Positionierungseinheit (15) einen Roboterarm (20), insbesondere einen Robotergelenkarm, vorzugsweise einen 5- oder 6-achsigen Roboterknickarm, umfasst, der mit der Ladegruppe (16) verbunden ist.

5. Anordnung zum automatischen Laden von Werkstücken nach einem der vorherigen Ansprüche,
**dadurch gekennzeichnet, dass**
die Aufnahmeöffnungen (13) in verschiedenen radialen Abständen von der Drehachse (A), vorzugsweise in radialen Reihen, entlang der Umfangsrichtung des Ladetellers (11) in gleichmäßigen Abständen voneinander ausgebildet sind.

6. Anordnung zum automatischen Laden von Werkstücken nach einem der vorherigen Ansprüche,
**dadurch gekennzeichnet, dass**
die Werkstücke (12) zylindrische, vorzugsweise kreiszylindrische, längliche Körper, vorzugsweise Schraubendruckfedern, insbesondere verschiedener Längen, sind.

7. Anordnung zum automatischen Laden von Werkstücken nach einem der vorherigen Ansprüche,
**dadurch gekennzeichnet, dass**
zwischen 2 und 20, vorzugsweise zehn Lademodule (17), vorgesehen sind.

8. Anordnung zum automatischen Laden von Werkstücken nach einem der Ansprüche 1 bis 6,
**dadurch gekennzeichnet, dass**
mehrere Lademodule (17), insbesondere der Anzahl der verschiedenen radialen Abstände der Aufnahmeöffnungen (13) entsprechend, für gleiche Werkstücke (12), insbesondere mit gleichem Durchmesser, vorgesehen sind.

9. Anordnung zum automatischen Laden von Werkstücken nach einem der vorherigen Ansprüche,
**dadurch gekennzeichnet, dass**
Lademodule (17), insbesondere mittels lösbarer Verbindungselemente (21), zur Ladegruppe (16) hinzugefügt und/oder aus der Ladegruppe (16) entfernt werden können.

10. Anordnung zum automatischen Laden von Werkstücken nach einem der vorherigen Ansprüche,
**dadurch gekennzeichnet, dass**
die Werkstücke (12) pneumatisch durch die Förderleitung (171) transportiert, insbesondere in den Halteabschnitt (172) gesaugt oder geblasen, werden.

11. Anordnung zum automatischen Laden von Werkstücken nach einem der vorherigen Ansprüche,
**dadurch gekennzeichnet, dass**
die Sperrvorrichtung (18) ein, vorzugsweise pneumatisch betätigbares, verschiebliches Fixierelement (181) umfasst, das geeignet ist, die Förderleitung (171) zumindest teilweise zu versperren, insbesondere in die Förderleitung (171) hineinzuragen, um ein Werkstück (12) im Halteabschnitt (172) zurückzuhalten.

12. Schleifmaschine, insbesondere Federendenschleifmaschine,
**gekennzeichnet durch**
eine Anordnung zum automatischen Laden von Werkstücken, insbesondere Schraubenfedern, nach einem der vorhergehenden Ansprüche und mindestens einen, vorzugsweise mehrere, Ladeteller (11), der bzw. die mit der Anordnung zum automatischen Laden von Werkstücken beladen werden kann bzw. können.

13. Verfahren zum automatischen Laden von Werkstücken, mit einer Anordnung nach einem der Ansprüche 1 bis 11, insbesondere in einen Ladeteller einer Schleifmaschine nach Anspruch 12, folgende Schritte umfassend:
a) Fördern (1001) mindestens eines Werkstückes (12) durch eine Förderleitung (171) in einen Halteabschnitt (172) mindestens eines Lademoduls (17), das als Teil einer Ladegruppe (16) an einem Bestückungsroboter (14) angebracht ist,
wobei mehrere unterschiedliche Lademodule (17) für verschiedene Sorten von Werkstücken (12), insbesondere unterschiedlicher Durchmesser, vorgesehen sind,
b) Positionieren (1002) der Ladegruppe, insbesondere mittels eines Roboterarms (20) des Bestückungsroboters (14), und/oder eines Ladetellers (11), insbesondere mittels Drehung um eine Drehachse (A) des Ladetellers (11), relativ zueinander, wobei eine Mündungsöffnung (173) des Lademoduls (17) oberhalb einer Aufnahmeöffnung (13) des Ladetellers (11) mit dieser übereinstimmend ausgerichtet wird,
c) Betätigen (1003) einer Sperrvorrichtung (18), sodass ein im Halteabschnitt (172) zurückgehaltenes Werkstück (12) freigegeben wird und in die Aufnahmeöffnung (13) fällt,
d) Wiederholen (1004) der Schritte a) bis c).

14. Verfahren nach Anspruch 13,
**dadurch gekennzeichnet, dass**
ein Bediener, insbesondere einer Schleifmaschine nach Anspruch 12, vorzugsweise mittels einer Bedieneinrichtung (22), zu Beginn des Verfahrens einzelne Lademodule (17) aus montierten Lademodulen (17) einer Ladegruppe (16) auswählt, für die das Verfahren, insbesondere die Schritte a) bis d), durchgeführt werden soll.

## Claims

1. An assembly for the automatic loading of workpieces comprising:
- a loading plate (11) for receiving workpieces (12) which
∘ is mounted rotatably about a rotational axis (A) and
∘ has a plurality of receiving openings (13) which are arranged eccentrically in respect of the rotational axis (A);
- a pick-and-place robot (14) for charging the loading plate (11) with workpieces (12), wherein the pick-and- place robot (14) comprises
∘ a positioning unit (15), in particular with a robot arm (20), and
∘ a loading group (16) with a plurality of loading modules (17) which each have
▪ a conveyor (171), a holding portion (172), an outlet opening (173) for workpieces (12) and
▪ a shut-off device (18) for retaining and releasing workpieces;
- a control unit (19) which is designed, multiple times in succession,
∘ to position the loading plate (11), in particular by rotation about its rotational axis (A), and/or the loading group (16), in particular by means of the positioning unit (15), relative to one another in such a manner that the outlet opening (173) of the at least one loading module (17) is oriented above a receiving opening (13) coinciding therewith and
∘ to release a workpiece (12) retained in the holding portion (172) by means of the shut-off device (18) in each case,
wherein a plurality of different loading modules (17) is provided for different kinds of workpieces (12), in particular of different diameters.

2. The assembly for the automatic loading of workpieces according to claim 1, **characterized in that**
the positioning unit (15) is configured to move the loading group (16) in the circumferential direction and/or radial direction of the loading plate (11), in particular from the control unit (19) in the circumferential direction and/or radial direction of the loading plate (11).

3. The assembly for the automatic loading of workpieces according to claim 1 or 2, **characterized in that**
the distance between the outlet opening (173) and a receiving opening (13) in the direction of the rotational axis (A) of the loading plate (11) can be changed, preferably by the robot arm (20), in particular depending on the length of the workpieces (12), can be adjusted, in particular by the control unit (19).

4. The assembly for the automatic loading of workpieces according to one of the preceding claims,
**characterized in that**
the positioning unit (15) comprises a robot arm (20), in particular an articulated robot arm, preferably a 5- or 6-axis articulated robot arm, which is connected to the loading group (16).

5. The assembly for the automatic loading of workpieces according to one of the preceding claims,
**characterized in that**
the receiving openings (13) are configured at different radial distances from the rotational axis (A), preferably in radial rows, along the circumferential direction of the loading plate (11) spaced uniformly from one another.

6. The assembly for the automatic loading of workpieces according to one of the preceding claims,
**characterized in that**
the workpieces (12) are cylindrical, preferably circular-cylindrical, elongate bodies, preferably helical compression springs, in particular of different lengths.

7. The assembly for the automatic loading of workpieces according to one of the preceding claims,
**characterized in that**
between 2 and 20, preferably ten, loading modules (17) are provided.

8. The assembly for the automatic loading of workpieces according to one of claims 1 to 6,
**characterized in that**
a plurality of loading modules (17), in particular corresponding to the number of the different radial distances between the receiving openings (13), is provided for the same workpieces (12), in particular with the same diameter.

9. The assembly for the automatic loading of workpieces according to one of the preceding claims,
**characterized in that**
loading modules (17) can be added to the loading group (16) and/or removed from the loading group (16) by means of detachable connection elements (21).

10. The assembly for the automatic loading of workpieces according to one of the preceding claims,
**characterized in that**
the workpieces (12) are transported pneumatically by the conveyor (171), in particular sucked or blown into the holding portion (172).

11. The assembly for the automatic loading of workpieces according to one of the preceding claims,
**characterized in that**
the shut-off device (18) comprises a preferably pneumatically actuable, displaceable fixing element (181) which is suitable for blocking the conveyor (171) at least partially, in particular projecting into the conveyor (171), in order to retain a workpiece (12) in the holding portion (172).

12. A grinding machine, in particular a spring end grinding machine,
**characterized by**
an arrangement for the automatic loading of workpieces, in particular helical springs, according to one of the preceding claims and at least one, preferably a plurality of, loading plates (11) which can be loaded using the assembly for the automatic loading of workpieces.

13. A method for the automatic loading of workpieces with an assembly according to one of claims 1 to 11, in particular in a loading plate of a grinding machine according to claim 12, the following steps comprising:
a) conveying (1001) of at least one workpiece (12) by a conveyor (171) in a holding portion (172) of at least one loading module (17) which is attached to a pick-and-place robot (14) as part of a loading group (16),
wherein a plurality of different loading modules (17) is provided for different kinds of workpieces (12), in particular of different diameters,
b) positioning (1002) of the loading group, in particular by means of a robot arm (20) of the pick-and-place robot (14) and/or of a loading plate (11), in particular by rotation about a rotational axis (A) of the loading plate (11), relative to one another, wherein an outlet opening (173) of the loading module (17) is oriented above a receiving opening (13) of the loading plate (11) in a manner corresponding thereto,
c) actuation (1003) of a shut-off device (18) so that a workpiece (12) retained in the holding portion (172) is released and falls into the receiving opening (13),
d) repetition (1004) of steps a) to c).

14. The method according to claim 13,
**characterized in that**
an operator, in particular a grinding machine according to claim 12, selects individual loading modules (17) from mounted loading modules (17) of a loading group (16) preferably by means of an operating device (22) at the start of the process, for which the method, in particular steps a) to d) are to be carried out.

## Revendications

1. Dispositif pour le chargement automatique de pièces, comprenant :
- un plateau de chargement (11) destiné à recevoir des pièces (12), lequel
∘ est monté de façon rotative autour d'un axe de rotation (A), et
∘ présente une pluralité d'ouvertures de réception (13) disposées de façon excentrée par rapport à l'axe de rotation (A) ;
- un robot de garnissage (14) pour garnir le plateau de chargement (11) avec des pièces (12), le robot de garnissage (14) comprenant :
∘ une unité de positionnement (15), en particulier avec un bras de robot (20), et
∘ un groupe de chargement (16) avec plusieurs modules de chargement (17) présentant respectivement
▪ une conduite de transport (171), une section de retenue (172), une embouchure (173) pour des pièces (12) et
▪ un dispositif de verrouillage (18) pour retenir et libérer des pièces,
- une unité de commande (19) conçue pour, et ce plusieurs fois consécutives :
∘ positionner le plateau de chargement (11), en particulier par une rotation autour de son axe de rotation (A), et/ou le groupe de chargement (16), en particulier à l'aide de l'unité de positionnement (15), l'un par rapport à l'autre, de manière à ce que l'embouchure (173) de l'au moins un module de chargement (17) située au-dessus d'une ouverture de réception (13) soit orientée de façon à coïncider avec celle-ci, et
∘ libérer, respectivement à l'aide du dispositif de verrouillage (18), une pièce (12) retenue dans la section de retenue (172),
dans lequel plusieurs modules de chargement (17) différents sont prévus pour différentes sortes de pièces (12), en particulier de diamètres différents.

2. Dispositif pour le chargement automatique de pièces selon la revendication 1, **caractérisé en ce que**
l'unité de positionnement (15) est conçue pour déplacer le groupe de chargement (16) dans la direction circonférentielle et/ou la direction radiale du plateau de chargement (11), en particulier pour être positionnée par l'unité de commande (19) dans la direction circonférentielle et/ou la direction radiale du plateau de chargement (11).

3. Dispositif pour le chargement automatique de pièces selon la revendication 1 ou 2,
**caractérisé en ce que**
l'espacement entre l'embouchure (173) et une ouverture de réception (13) dans la direction de l'axe de rotation (A) du plateau de chargement (11) peut être modifié, de préférence par le biais du bras de robot (20), en particulier en fonction de la longueur des pièces (12), en particulier réglé par l'unité de commande (19).

4. Dispositif pour le chargement automatique de pièces selon l'une des revendications précédentes,
**caractérisé en ce que**
l'unité de positionnement (15) comporte un bras de robot (20), en particulier un bras articulé de robot, de préférence un bras coudé de robot à 5 ou 6 axes, lequel est relié au groupe de chargement (16).

5. Dispositif pour le chargement automatique de pièces selon l'une des revendications précédentes,
**caractérisé en ce que**
les ouvertures de réception (13) sont formés à différentes distances radiales de l'axe de rotation (A), de préférence dans des rangées radiales, le long de la direction circonférentielle du plateau de chargement (11) à des distances égales les unes des autres.

6. Dispositif pour le chargement automatique de pièces selon l'une des revendications précédentes,
**caractérisé en ce que**
les pièces (12) sont des corps allongés cylindriques, de préférence cylindriques circulaires, de préférence des ressorts de compression hélicoïdaux, en particulier de différentes longueurs.

7. Dispositif pour le chargement automatique de pièces selon l'une des revendications précédentes,
**caractérisé en ce que**
il est prévu entre 2 et 20 modules de chargement (17), de préférence dix.

8. Dispositif pour le chargement automatique de pièces selon l'une des revendications 1 à 6,
**caractérisé en ce que**
plusieurs modules de chargement (17), en particulier au nombre des différentes distances radiales des ouvertures de réception (13), sont prévus pour des pièces (12) identiques, en particulier avec un même diamètre.

9. Dispositif pour le chargement automatique de pièces selon l'une des revendications précédentes,
**caractérisé en ce que**
des modules de chargement (17) peuvent être ajoutés au groupe de chargement (16), en particulier au moyen d'éléments d'assemblage amovibles (21), et/ou retirés du groupe de chargement (16).

10. Dispositif pour le chargement automatique de pièces selon l'une des revendications précédentes,
**caractérisé en ce que**
les pièces (12) sont transportées de façon pneumatique à travers la conduite de transport (171), en particulier aspirées ou soufflées dans la section de retenue (172).

11. Dispositif pour le chargement automatique de pièces selon l'une des revendications précédentes,
**caractérisé en ce que**
le dispositif de verrouillage (18) comporte un élément de fixation (181) déplaçable, de préférence apte à être actionné de façon pneumatique, lequel est adapté pour verrouiller au moins partiellement la conduite de transport (171), en particulier pour faire saillie dans la conduite de transport (171), afin de retenir une pièce (12) dans la section de retenue (172).

12. Rectifieuse, en particulier une rectifieuse pour des extrémités de ressort, **caractérisée par**
un dispositif pour le chargement automatique de pièces, en particulier des ressorts hélicoïdaux, selon l'une des revendications précédentes, et au moins un plateau de chargement (11), de préférence plusieurs, lequel ou lesquels peut ou peuvent être chargés avec le dispositif pour le chargement automatique de pièces.

13. Procédé pour le chargement automatique de pièces, avec un dispositif selon l'une des revendications 1 à 11, en particulier sur un plateau de chargement d'une rectifieuse selon la revendication 12, comprenant les étapes suivantes :
a) transport (1001) d'au moins une pièce (12) à travers une conduite de transport (171) dans une section de retenue (172) d'au moins un module de chargement (17), lequel est fixé à un robot de garnissage (14) en tant qu'élément d'un groupe de chargement (16),
où il est prévu plusieurs modules de chargement (17) différents pour différentes sortes de pièces (12), en particulier de diamètres différents,
b) positionnement (1002) du groupe de chargement, en particulier au moyen d'un bras de robot (20) du robot de garnissage (14), et/ou d'un plateau de chargement (11), en particulier au moyen d'une rotation autour d'un axe de rotation (A) du plateau de chargement (11), l'un par rapport à l'autre, une embouchure (173) du module de chargement (17) située au-dessus d'une ouverture de réception (13) du plateau de chargement (11) étant orientée de manière à coïncider avec celle-ci,
c) actionnement (1003) d'un dispositif de verrouillage (18) de manière à libérer une pièce (12) retenue dans la section de retenue (172) et à la faire tomber dans l'ouverture de réception (13),
d) répétition (1004) des étapes a) à c).

14. Procédé selon la revendication 13,
**caractérisé en ce que**
un opérateur, en particulier d'une rectifieuse selon la revendication 12, sélectionne, de préférence au moyen d'un dispositif de commande (22), au début du procédé, différents modules de chargement (17) pour lesquels le procédé doit être exécuté, en particulier les étapes a) à d), à partir de modules de chargement (17) montés d'un groupe de chargement (16).
